# EUROPEAN PATENT APPLICATION

(11) **EP 4 239 764 A1**
(43) Date of publication of application: **06.09.2023**
(21) Application number: 21886138.3
(22) Date of filing: 25.10.2021
(51) Int. Cl.: H01M 50/152, H01M 50/184, H01M 50/342

(54) **CYLINDRICAL BATTERY**

(30) Priority: 28.10.2020 JP 2020180646
(71) Applicant: SANYO Electric Co., Ltd., Daito-shi Osaka 574-8534 (JP)
(72) Inventor: YAMASHITA, Keisuke, Osaka-shi, Osaka 540-6207 (JP)
(74) Representative: Novagraaf International SA
(86) International application number: PCT/JP2021/039285
(87) International publication number: WO 2022/092020

(57) **Abstract**

This cylindrical battery comprises a cylindrical outer can having a closed end, and a sealing body that closes an opening of the outer can. The sealing body has a sealing plate (27) including a plurality of thick portions (40) that extend radially in the radial direction, and a plurality of thin portions (41) that extend radially in the radial direction and are thinner than the thick portions (40). The plurality of thick portions (40) and the plurality of thin portions (41) are arranged alternating in the circumferential direction. In this way, the sealing plate becomes less susceptible to deformation and increased capacity becomes easier to realize, while material costs of the sealing plate are suppressed.

## Description

### TECHNICAL FIELD

The present disclosure generally relates to a cylindrical battery.

### BACKGROUND ART

There has been a known cylindrical battery, which is disclosed in PATENT LITERATURE 1. The cylindrical battery has a sealing plate in which a plurality of reinforcement projections are provided on an outer surface thereof exposed to outside so as to radially extend from a center thereof at a intervals in a circumferential direction. This prevents deformation of the sealing plate in a case where an inner pressure of the battery is greatly increased by gas generated in the battery and prevents gas and an electrolyte liquid from leaking out from between the sealing plate and an exterior can body.

### CITATION LIST

### PATENT LITERATURE

PATENT LITERATURE 1: Japanese Unexamined Patent Application Publication No. 2005-267936

### SUMMARY

### TECHNICAL PROBLEM

In a cylindrical battery, a sealing plate is fixed to an exterior housing can via resin by radially inwardly crimping the exterior housing can in an opening side thereof, in order to seal an interior space of the cylinder battery. In order to obtain sufficient sealability by the crimping, it is necessary to apply a large load to an end of the sealing plate. However, at this time, if the rigidity of the sealing plate is low, the sealing plate is deformed, which deteriorates the airtightness and subsequent assemblability of the battery.

Under such a background, it is possible to avoid the above-described problems if the thickness of the sealing plate is increased and the rigidity of the sealing assembly is increased. However, when the thickness of the sealing plate is increased, the material cost of the sealing plate increases, which increases manufacturing cost, and the volume of the interior space is reduced, which makes it difficult to achieve high capacity of the battery.

It is an advantage of the present disclosure to provide a cylindrical battery which is less prone to deformation of a sealing plate and is easy to achieve high capacity while reducing a material cost of the sealing plate.

### SOLUTION TO PROBLEM

In order to solve the above problems, a cylindrical battery according to the present disclosure comprises a bottomed cylindrical exterior housing can, and a sealing assembly that closes an opening of the exterior housing can, wherein the sealing assembly has a sealing plate that includes a plurality of thick portions radially extending in a radial direction, and a plurality of thin portions radially extending in the radial direction and each having a thickness thinner than the thickness of the thick portions, and the plurality of thick portions and the plurality of thin portions are alternately arranged in a circumferential direction.

### ADVANTAGEOUS EFFECTS OF INVENTION

According to a cylindrical battery of the present disclosure, a sealing plate is less prone to deformation and it is easy to achieve high capacity while reducing a material cost of the sealing plate.

### BRIEF DESCRIPTION OF DRAWING

FIG. 1 is an axial sectional view of a cylindrical battery according to an example of an embodiment of the present disclosure.
FIG. 2 is a perspective view of an electrode assembly of the cylindrical battery.
FIG. 3 is an enlarged sectional view of a sealing assembly peripheral portion of the cylindrical battery.
FIG. 4 is a diagram illustrating a structure of a sealing plate of the cylindrical battery, in which FIG. 4(a) is a plan view when the sealing plate is viewed from a lower side in an axial direction, and FIG. 4(b) is a sectional view taken along line A-A of FIG. 4(a).
FIG. 5 is a diagram illustrating a structure of a sealing plate of comparative example 1, in which FIG. 5(a) is a plan view when the sealing plate of comparative example 1 is viewed from a lower side in an axial direction, and FIG. 5(b) is a sectional view taken along line B-B of FIG. 5(a).
FIG. 6 is a diagram illustrating a structure of a sealing plate of comparative example 2, in which FIG. 6(a) is a plan view when the sealing plate of comparative example 2 is viewed from a lower side in an axial direction, and FIG. 6(b) is a sectional view taken along line C-C of FIG. 6(a).

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments and modified examples and the like are included in the following description, it is assumed from the beginning that a new embodiment is constructed by appropriately combining those feature portions. In the following embodiments, the same components are denoted by the same reference numerals in the drawings, and duplicate descriptions are omitted. Schematic diagrams area included in a plurality of the drawings, and the dimensional ratios such as lengths, widths and heights of each member between different drawings are not necessarily the same. In this specification, for convenience of explanation, the direction along the axial direction of a battery case 15 is defined as the height direction, a sealing assembly 17 side in the height direction is defined as "upper", and the bottom side of an exterior housing can 16 in the height direction is defined as "lower". Of the components described below, components that are not described in the independent claim indicating the highest level concept are arbitrary components, and are not essential components.

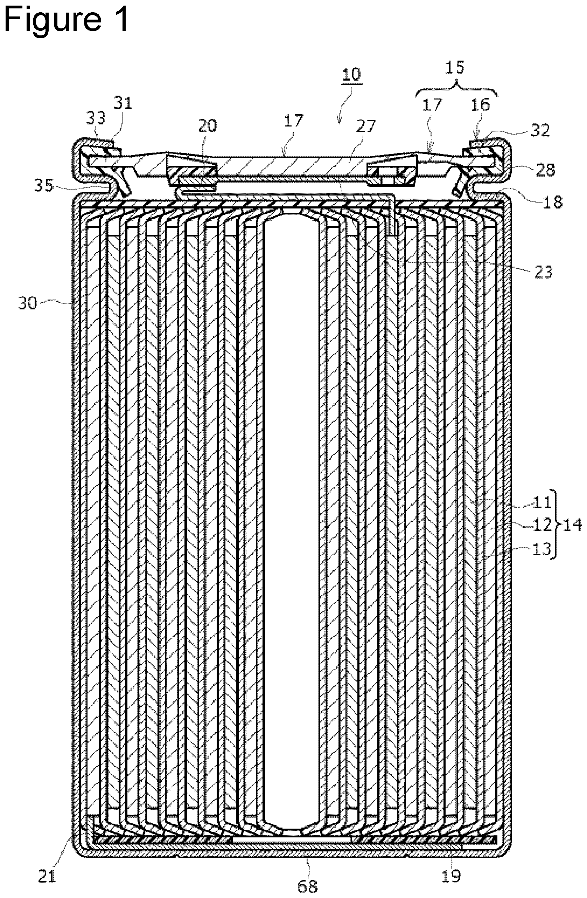

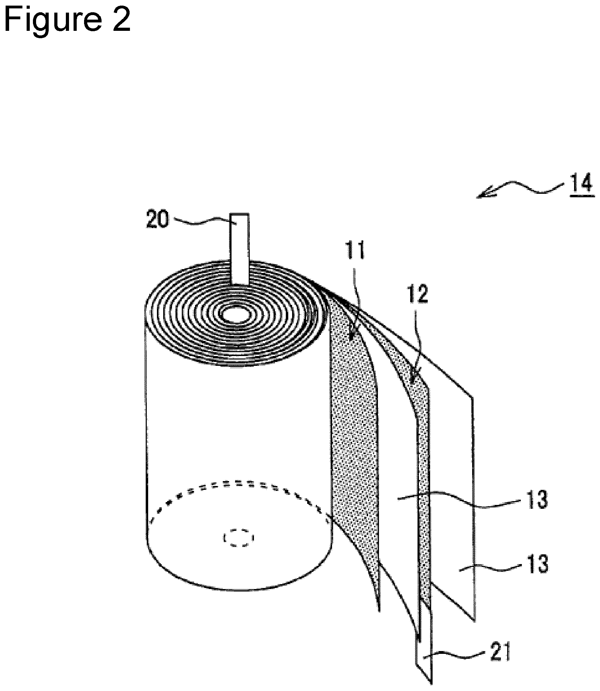

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery 10 comprises the wound-type electrode assembly 14, a non-aqueous electrolyte (not illustrated), and the battery case 15 that houses the electrode assembly 14 and the non-aqueous electrolyte. As illustrated in FIG. 2, the electrode assembly 14 includes a positive electrode 11, a negative electrode 12, and a separator 13 interposed between the positive electrode 11 and the negative electrode 12, and has a wound structure in which the positive electrode 11 and the negative electrode 12 are wound with the separator 13 interposed therebetween. Referring to FIG. 1 again, the battery case 15 is composed of the bottomed cylindrical exterior housing can 16 and the sealing assembly 17 that closes an opening of the exterior housing can 16. The cylindrical battery 10 comprises a resin gasket 28 interposed between the exterior housing can 16 and the sealing assembly 17.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen- substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

As illustrated in FIG. 2, the electrode assembly 14 has the long positive electrode 11, the long negative electrode 12, and the two long separators 13. The electrode assembly 14 has a positive electrode lead 20 joined to the positive electrode 11 and a negative electrode lead 21 joined to the negative electrode 12. The negative electrode 12 is formed to be one size larger than the positive electrode 11 in order to suppress precipitation of lithium, and is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween.

The positive electrode 11 has a positive electrode current collector and a positive electrode mixture layer formed on each side of the current collector. Examples of the positive electrode current collector may include a foil of a metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each side of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of the lithium-containing metal composite oxide is preferably a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide, acrylic resins, and polyolefin.
These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each side of the current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each side of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, an Si-containing compound may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. As the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13. Note that the negative electrode 12 may include a winding start end of the electrode assembly 14, but the separator 13 generally extends beyond a winding start side end of the negative electrode 12, and a winding start side end of the separator 13 serves as the winding start end of the electrode assembly 14.

In the example illustrated in FIGS. 1 and 2, the positive electrode lead 20 is electrically connected to an intermediate portion such as a center portion in the winding direction of a positive electrode core, and the negative electrode lead 21 is electrically connected to a winding finish end in the winding direction of a negative electrode core. However, the negative electrode lead may be electrically connected to a winding start end in the winding direction of the negative electrode core. Alternatively, the electrode assembly may have two negative electrode leads so that one of the negative electrode leads is electrically connected to the winding start end in the winding direction of the negative electrode core, and the other negative electrode lead is electrically connected to the winding finish end in the winding direction of the negative electrode core. Alternatively, a winding finish side end in the winding direction of the negative electrode core is brought into contact with an inner surface of the exterior housing can so that the negative electrode and the exterior housing can may be electrically connected.

As illustrated in FIG. 1, the cylindrical battery 10 further has an insulating plate 18 disposed on the upper side of the electrode assembly 14, and an insulating plate 19 disposed on the lower side of the electrode assembly 14. In the example illustrated in FIG. 1, the positive electrode lead 20 attached to the positive electrode 11 extends toward the sealing assembly 17 through a through hole of the insulating plate 18, and the negative electrode lead 21 attached to the negative electrode 12 extends to a bottom 68 of the exterior housing can 16 along the outside of the insulating plate 19. The positive electrode lead 20 is connected to a lower surface of a terminal plate 23, which is a bottom plate of the sealing assembly 17, by means of welding or the like, and a sealing plate 27, which is a top plate of the sealing assembly 17 electrically connected to the terminal plate 23, serves as a positive electrode terminal. The negative electrode lead 21 is connected to an inner surface of the bottom 68 of the exterior housing can 16 by means of welding or the like, and the exterior housing can 16 serves as a negative electrode terminal.

The exterior housing can 16 is a metal container having a bottomed cylindrical portion. A portion between the exterior housing can 16 and the sealing assembly 17 is sealed by the annular gasket 28, and an internal space of the battery case 15 is closed by sealing. The gasket 28 includes a holding portion 32 held by the exterior housing can 16 and the sealing assembly 17, and insulates the sealing assembly 17 from the exterior housing can 16. That is, the gasket 28 has a role of a seal material for maintaining the airtightness of the inside of the battery, and a role as an insulating material for preventing a short circuit between the exterior housing can 16 and the sealing assembly 17.

The exterior housing can 16 has an annular groove 35 in one part in the height direction of a cylindrical outer circumferential surface of the exterior housing can 16. The groove 35 can be formed by, for example, recessing the one part of the cylindrical outer circumferential surface toward the inward side in the radial direction by a radially inward spinning process. The exterior housing can 16 has a bottomed cylindrical portion 30 including the groove 35, and an annular shoulder 33. The bottomed cylindrical portion 30 houses the electrode assembly 14 and the non-aqueous electrolyte, and the shoulder 33 is bent to the inward side in the radial direction from an end of the bottomed cylindrical portion 30 on the opening side to extend inward in the radial direction. The shoulder 33 is formed when an upper end of the exterior housing can 16 is bent to the inner side and crimped onto a circumferential edge 31 of the sealing assembly 17. The sealing assembly 17 is fixed to the exterior housing can 16 with the gasket 28 interposed between the shoulder 33 and the groove 35 by the crimping.

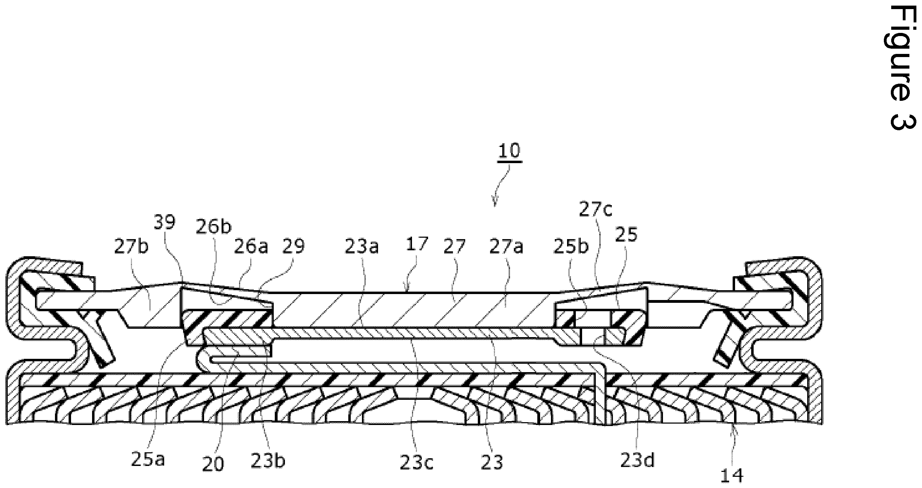

Next, the structure, current cutoff operation, and gas release operation of the sealing assembly 17 will be described. FIG. 3 is an enlarged sectional view of a sealing assembly peripheral portion of the cylindrical battery 10. As illustrated in FIG. 3, the sealing assembly 17 has a stacked structure of the terminal plate 23, an annular insulating plate 25, and the sealing plate 27 in this order from the electrode assembly 14 side. Each member constituting the sealing assembly 17 has a disk shape or a ring shape, and each member except for the insulating plate 25 is electrically connected each other. The terminal plate 23 has a circular upper surface 23a that forms a bottom plate of the sealing assembly 17 and is located on substantially the same plane. The terminal plate 23 has an annular thick portion 23b that is located on the outward side in the radial direction, and a disk-shaped thin portion 23c that is connected to an annular end on the inward side in the radial direction of the thick portion 23b and is thinner than the thick portion 23b. The positive electrode lead 20 is connected to a lower surface of the thick portion 23b of the terminal plate 23 by means of welding or the like.

The sealing plate 27 has a circular shape in plan view. The sealing plate 27 can be produced by, for example, pressing a plate material made of aluminum or an aluminum alloy. The aluminum and the aluminum alloy are excellent in flexibility, and therefore is preferably as a material of the sealing plate 27 functioning as an explosion-proof valve. The sealing plate 27 has a circular shape in plan view. The sealing plate 27 has a center portion 27a, an outer circumferential portion 27b, and an inclined portion 27c that connects the center portion 27a and the outer circumferential portion 27b. The upper surface of the thin portion 23c of the terminal plate 23 and the lower surface of the center portion 27a of the sealing plate 27 are jointed to each other by means of a metallurgical joint, e.g., laser welding. When the terminal plate 23 is formed by aluminum or an aluminum alloy in the same manner as in the sealing plate 27, the sealing plate 27 and the terminal plate 23 can be easily joined to each other.

The thickness of the inclined portion 27c is thinner than that of the center portion 27a. The lower surface of the inclined portion 27c is located higher than the lower surface of the center portion 27a, and is connected to the lower surface of the center portion 27a via an annular step 29. An annular upper surface 26a of the inclined portion 27c is an inclined surface inclined upward toward the outward side in the radial direction, and an annular lower surface 26b of the inclined portion 27c is also an inclined surface inclined upward toward the outward side in the radial direction. The thickness of the inclined portion 27c decreases toward the outward side in the radial direction.

The insulating plate 25 is externally press-fitted and fixed to the outer circumferential surface of the annular step 29, for example. The insulating plate 25 has an annular projection 25a that is bent downward in the height direction on the radially outer circumferential side, and the thick portion 23b of the terminal plate 23 is internally press-fitted and fixed to the inner circumferential surface of the annular projection 25a, for example. The insulating plate 25 is provided to ensure an insulation property, and prevents the thick portion 23b of the terminal plate 23 from being electrically connected to the sealing plate 27.

The insulating plate 25 is preferably made of a material that does not affect a battery characteristic. Examples of the material of the insulating plate 25 include polymer resin, and polypropylene (PP) resin and polybutylene terephthalate (PBT) resin can be exemplified. The insulating plate 25 has one or more vent holes 25b that pass therethrough in the height direction at portions aligned with the height direction of the inclined portion 27c of the sealing plate 27, and the terminal plate 23 has one or more vent holes 23d that pass therethrough in the height direction at portions aligned with the height direction of the inclined portion 27c and communicate with the respective vent holes 25b.

In the above-described configuration, when the internal pressure of the cylindrical battery 10 reaches a predetermined value due to abnormal heat generation of the cylindrical battery 10, the sealing assembly 17 performs the current cutoff operation and the gas release operation as follows. Specifically, when the internal pressure of the cylindrical battery 10 reaches the predetermined value, the center portion 27a and the inclined portion 27c of the sealing plate 27 are inverted upward in the height direction with an annular end 39 serving as a fulcrum, the annular end 39 having the low rigidity and being located on the outward side in the radial direction in the inclined portion 27c. At the same time as the inversion, the thin portion 23c of the terminal plate 23 breaks, whereby a portion connected to the sealing plate 27 is disconnected from the terminal plate 23 or the welded portion between the terminal plate 23 and the sealing plate 27 is disengaged. This operation cuts off a current path between the terminal plate 23 and the sealing plate 27. When the internal pressure further rises, the annular end 39 of the inclined portion 27c breaks, and the gas inside the battery is emitted to the outside from the broken portion in the sealing plate 27 through the vent holes 23d and the vent holes 25b. This prevents the battery from rupturing even when the internal pressure of the cylindrical battery 10 rises, which makes it possible to suppress the influence on an apparatus on which the cylindrical battery 10 is mounted, and enhance the safety. The inclined portion 27c of the sealing plate breaks to serve as a breakable part that emits the internal gas to the outside.

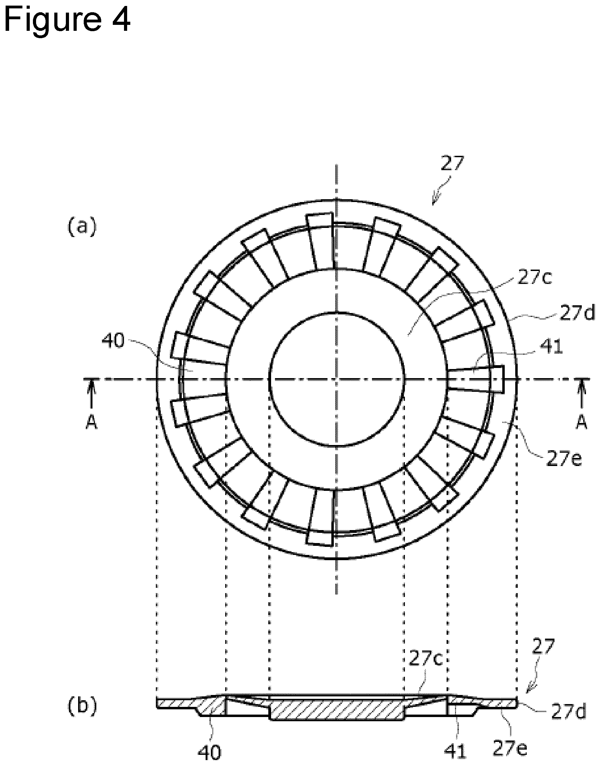

FIG. 4 is a diagram illustrating a structure of the sealing plate 27. Specifically, FIG. 4(a) is a plan view when the sealing plate 27 is viewed from the lower side in the height direction, and FIG. 4(b) is a sectional view taken along line A-A of FIG. 4(a).

As illustrated in FIG. 4, the sealing plate 27 has a plurality of thick portions 40 radially extending in the radial direction, and a plurality of thin portions 41 radially extending in the radial direction and each having a thickness thinner than the thickness of the thick portions 40. As illustrated in FIG. 4(a), the plurality of thick portions 40 and the plurality of thin portions 41 are alternately arranged in the circumferential direction. The plurality of thick portions 40 are arranged at equal intervals in the circumferential direction, and the plurality of thin portions 41 are also arranged at equal intervals in the circumferential direction. Each of the thick portions 40 and the thin portions 41 has a circumferential width narrower toward the inward side in the radial direction, and therefore is tapered toward the inward side in the radial direction.

As illustrated in FIG. 4(b), the thick portion 40 has a portion located on the lower side in the height direction of a lower end in the height direction of the inclined portion 27c, whereas all of the thin portions 41 are located on the upper side in the height direction of the lower end in the height direction of the inclined portion 27c. Each of the thick portions 40 and the thin portions 41 is located on the outward side in the radial direction of the inclined portion 27c forming the breakable part. More specifically, each of the thick portions 40 and the thin portions 41 extends from a position radially spaced from an outer edge 27d of the sealing plate 27 toward the inward side in the radial direction to the inclined portion 27c. In the present embodiment, an annular portion 27e that has a uniform thickness at the circumferential existing position is provided at an end on the outward side in the radial direction of the sealing plate 27. In this way, the outer edge of the sealing plate 27 that contacts the gasket 28 has a uniform circumferential structure, whereby the sealing assembly 17 excellent in the airtightness can be easily achieved.

In the present embodiment, the sealing plate 27 has the plurality of thick portions 40 radially extending in the radial direction and the plurality of thin portions 41 radially extending in the radial direction, and both of the plurality of thick portion 40 and the plurality of thin portions 41 radially extend in the radial direction unlike the sealing plate disclosed in PATENT LITERATURE 1. Also, in the present embodiment, recesses and projections are provided on a rear surface (lower surface) of the sealing plate 27 unlike the sealing plate disclosed in PATENT LITERATURE 1. Accordingly, the present embodiment makes it possible to increase the mechanical strength while reducing an increase in mass of the sealing plate as compared to the case where the thickness of the sealing plate is simply increased.

### <Measurement of Mass and Strain Amount of Sealing Plate>

The present inventor measured a mass and a strain amount of a sealing plate according to each of Example, Comparative Example 1, and Comparative Example 2, which are specifically described below. The strain amount was measured on the basis of a strain generated when a predetermined up-down directional load was applied to each sealing plate. The load applied to each sealing plate was determined assuming a load received by each sealing plate at the time of crimping. Note that it is believed that when the up-down directional load is applied to each sealing plate, a load toward the inward side in the radial direction is also applied to each sealing plate, and therefore a strain is generated in each sealing plate.

### [Sealing Plate of Example]

As a sealing plate of Example, the sealing plate 27 specifically described using FIG. 4, i.e., a sealing plate was used in which the plurality of thick portions 40 radially extending in the radial direction and the plurality of thin portions 41 radially extending in the radial direction were alternately arranged in the circumferential direction.

### [Sealing Plate of Comparative Example 1]

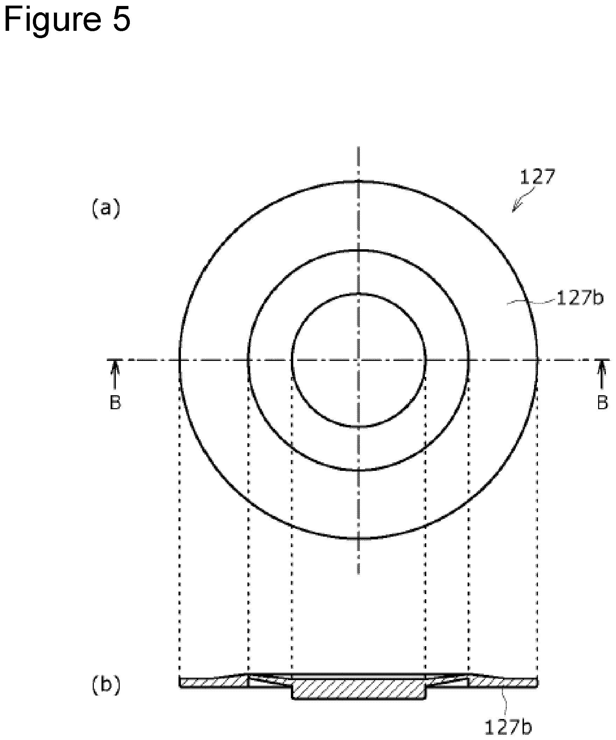

As a sealing plate of Comparative Example 1, a sealing plate 127 illustrated in FIG. 5 was used. FIG. 5(a) is a plan view of the sealing plate 127 of Comparative Example 1, corresponding to FIG. 4(a), and FIG. 5(b) is a sectional view of the sealing plate 127 of Comparative Example 1 taken along line B-B of FIG. 5(a), corresponding to FIG. 4(b). The sealing plate 127 of Comparative Example 1 is different from the sealing plate 27 of Example only in that the rear surface of an outer circumferential portion 127b is flat without recesses and projections formed by the thick portions and the thin portions, and the sealing plate 127 of Comparative Example 1 has the same mass as that of the sealing plate 27 of Example. The sealing plate 127 of Comparative Example 1 has the same material and outer diameter as those of the sealing plate 27 of Example.

### [Sealing Plate of Comparative Example 2]

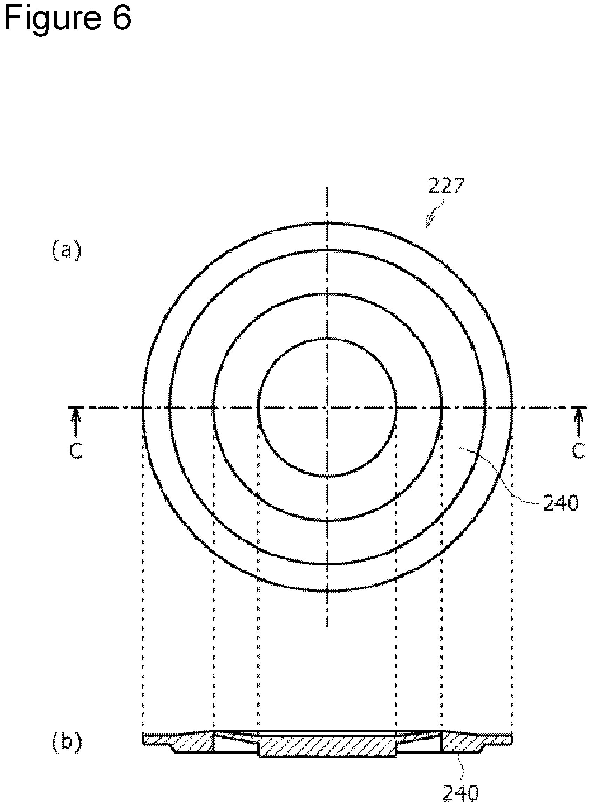

As a sealing plate of Comparative Example 2, a sealing plate 227 illustrated in FIG. 6 was used. FIG. 6(a) is a plan view of the sealing plate 227 of Comparative Example 2, corresponding to FIG. 4(a), and FIG. 6(b) is a sectional view of the sealing plate 227 of Comparative Example 2 taken along line C-C of FIG. 6(a), corresponding to FIG. 4(b). The sealing plate 227 of Comparative Example 2 is different from the sealing plate 27 of Example only in that the thin portions are replaced with the thick portions. That is, in the sealing plate 227 of Comparative Example 2, a thick portion 240 is arranged along the entire circumference of the sealing plate 227. The sealing plate 227 of Comparative Example 2 has the same material and outer diameter as those of the sealing plate 27 of Example.

### [Test Results]

The test results are shown in Table 1.

**[Table 1]**

| | Sealing plate | |
|---|---|---|
| | Mass | Strain amount |
| Example | Small | Small |
| Comparative Example 1 | Small | Large |
| Comparative Example 2 | Large | Small |

The following conclusions are drawn from the above test results. That is, when no thick and thin portions exist in the sealing plate as in Comparative Example 1, a strain amount when the load is applied is increased, despite the fact that the sealing plate of Comparative Example 1 has the same mass as that of the sealing plate of Example. Therefore, according to Example, it is possible to prevent the deformation of the sealing plate at the time of crimping while reducing the material cost of the sealing plate.

When the thick portion is arranged along the entire circumference of the sealing plate as in Comparative Example 2, a strain amount when the load is applied is reduced, whereas the mass of the sealing plate is greater than that of the sealing plate of Example. Therefore, according to Example, it is possible not only to secure the mechanical strength but also reduce an increase in volume of the sealing plate to increase the internal space of the battery.

As described above, with the sealing plate of the present disclosure, it is possible to provide a cylindrical battery which is less prone to deformation of the sealing plate and is easy to achieve high capacity while reducing a material cost of the sealing plate.

### [Essential Configuration of Cylindrical Battery of the Present Disclosure and Operational Effects Thereof]

As described above, a cylindrical battery 10 of the present disclosure comprises a bottomed cylindrical exterior housing can 16 and a sealing assembly 17 that closes an opening of the exterior housing can 16. The sealing assembly 17 has a sealing plate 27 that includes a plurality of thick portions 40 radially extending in a radial direction, and a plurality of thin portions 41 radially extending in the radial direction and each having a thickness thinner than the thickness of the thick portions 40. Additionally, the plurality of thick portions 40 and the plurality of thin portions 41 are alternately arranged in a circumferential direction.

Accordingly, since the plurality of thick portions 40 radially extending in the radial direction are provided in the sealing plate 27, the radial load generated at the time of crimping can be intensively received by the plurality of thick portions 40. Therefore, as shown in the above test results, the radial load bearing capacity can be improved, and the deformation of the sealing plate 27 at the time of crimping can be prevented.

Furthermore, the sealing plate 27 has the plurality of thick portions 40 radially extending in the radial direction and the plurality of thin portions 41 radially extending in the radial direction, and both of the plurality of thick portion 40 and the plurality of thin portions 41 radially extend in the radial direction. Accordingly, the thickness of the thick portion 40 and the thickness of the thin portion 41 can be easily adjusted so that the mass of the sealing plate 27 is the same as the mass of the current sealing plate, and the material cost of the sealing plate can be reduced, and the higher capacity can be easily achieved. When the recesses and the projections are provided on the rear surface of the sealing plate 27 as in the above-described embodiment, the volume of the internal space of the cylindrical battery 10 can be easily adjusted not to be reduced even when the plurality of thick portions 40 and the plurality of thin portions 41 are provided, and the higher capacity of the cylindrical battery 10 can be easily achieved.

Accordingly, with the sealing plate 27 of the present disclosure, it is possible to provide the excellent cylindrical battery 10 which makes it possible to achieve the following two performances, i.e., both of the load bearing capacity (less prone to deformation at the time of crimping) and the higher capacity while reducing the material cost of the sealing plate 27.

### [Cylindrical Battery Configuration Preferable for Adoption and Operational Effects Thereof]

The thick portions 40 may be tapered toward the radial inward side.

As described above, the sealing plate 27 may have a breakable part (in the present embodiment, a radially outward side end of the inclined portion 27c) that breaks when the internal pressure of the battery becomes excessively high to release the internal gas to the outside to ensure the safety. In such a case, when the width of the thick portion in the circumferential direction is still large up to the inward side in the radial direction, the breakage may be less proper or smooth to occur.

In contrast, according to the above-described configuration, the thick portions 40 are tapered toward the radial inward side, and therefore the rigidity of the thick portions 40 is reduced toward the radial inward side. Accordingly, the good breakability of the breakable part can be easily obtained while obtaining the good radial load bearing capacity at the time of crimping.

The sealing plate 27 may have a breakable part that breaks to release the internal gas to the outside, and the thick portions 40 and the thin portions 41 may be located on the outward side of the breakable part in the radial direction.

According to the above-described configuration, the thick portions 40 can substantially prevent the influence on the breakability of the breakable part. Accordingly, it is possible to provide the cylindrical battery 10, which is less prone to the deformation of the sealing plate 27, reduces the material cost of the sealing plate, easily achieves the higher capacity, and can provide good breakability of the breakable part and excellent safety.

The present disclosure is not limited to the above embodiment and modified examples thereof, and various improvements and changes are possible within the matters described in the claims of the present application and the scope of equivalence of claims.

For example, in the above-described embodiment, the case has been described where the thick portions 40 are tapered toward the radial inward side. However, the rib-shaped thick portions having the same width regardless of the radial position may be provided in the sealing plate. The case has been described where the thick portions 40 and the thin portions 41 are located on the outward side in the radial direction of the breakable part. However, each of the thick portions and the thin portions may have a portion existing at a position overlapping with the breakable part when viewed from the height direction.

The case has been described where the plurality of thick portions 40 are arranged on the sealing plate 27 at equal intervals in the circumferential direction. However, the plurality of thick portions are not necessarily arranged on the sealing plate at equal intervals in the circumferential direction. The case has been described where the thick portion 40 and the thin portion 41 extend from a position radially spaced from an outer edge of the sealing plate 27 to the inclined portion 27c. However, the thick portion and the thin portion may extend from the outer edge of the sealing plate toward the inward side in the radial direction.

The case has been described where the thick portion 40 has a portion located on the lower side in the height direction of a lower end in the height direction of the inclined portion 27c, whereas all of the thin portions 41 are located on the upper side in the height direction of the lower end in the height direction of the inclined portion 27c. However, both of the thick portion and the thin portion may have a portion located on the lower side in the height direction of the lower end in the height direction of the inclined portion. The case has been described where the recesses and the projections based on the formation of the thick portions and the thin portions are provided only on the rear surface of the sealing plate 27. However, the recesses and the projections based on the formation of the thick portions and the thin portions may be provided on a front surface of the sealing assembly or may be provided both of the front surface and the rear surface of the sealing assembly. The case has been described where the sealing plate 27 has the inclined portion 27c, and the inclined portion 27c has the breakable part. However, the sealing plate does not necessarily have the inclined portion, and the breakable part does not necessarily exist in the inclined portion.

### REFERENCE SIGNS LIST

10 Cylindrical battery, 11 Positive electrode, 12 Negative electrode, 13 Separator, 14 Electrode assembly, 15 Battery case, 16 Exterior housing can, 17 Sealing assembly, 18 Insulating plate, 19 Insulating plate, 20 Positive electrode lead, 21 Negative electrode lead, 23 Terminal plate, 23a Upper surface, 23b Thick portion, 23c Thin portion, 23d Vent hole, 25 Insulating plate, 25a Annular projection, 25b Vent hole, 26a Upper surface, 26b Lower surface, 27, 127, 227 Sealing plate, 27a Center portion, 27b, 127b Outer circumferential portion, 27c, 227c Inclined portion, 27d Outer edge, 27e Annular portion, 28 Gasket, 29 Step, 30 Bottomed cylindrical portion, 31 Circumferential edge, 32 Holding portion, 33 Shoulder, 35 Groove, 39 Annular end, 40, 240 Thick portion, 41 Thin portion, 68 Bottom of exterior housing can

## Claims

1. A cylindrical battery, comprising:
a bottomed cylindrical exterior housing can; and
a sealing assembly that closes an opening of the exterior housing can,
wherein the sealing assembly has a sealing plate that includes a plurality of thick portions radially extending in a radial direction, and a plurality of thin portions radially extending in the radial direction and each having a thickness thinner than the thickness of the thick portions, and
the plurality of thick portions and the plurality of thin portions are alternately arranged in a circumferential direction.

2. The cylindrical battery according to claim 1, wherein
the thick portions are tapered toward an inward side in the radial direction.

3. The cylindrical battery according to claim 1 or 2, wherein
the sealing plate has a breakable part that breaks to release internal gas to an outside, and
the thick portions and the thin portions are located on an outward side of the breakable part in the radial direction.
